(19) Europäisches Patentamt / European Patent Office / Office européen des brevets

(11) **EP 3 529 078 B1**

(12) **FASCICULE DE BREVET EUROPEEN**

(45) Date de publication et mention de la délivrance du brevet:
**08.07.2020 Bulletin 2020/28**

(21) Numéro de dépôt: **17764419.2**

(22) Date de dépôt: **13.09.2017**

(51) Int Cl.:
**B32B 37/14** *(2006.01)*    *B32B 7/12* *(2006.01)*
*B32B 15/08* *(2006.01)*    *B32B 27/08* *(2006.01)*
*E04B 1/80* *(2006.01)*

(86) Numéro de dépôt international:
**PCT/EP2017/073067**

(87) Numéro de publication internationale:
**WO 2018/072931 (26.04.2018 Gazette 2018/17)**

(54) **CRÉATION DE PANNEAUX ISOLANTS SOUS VIDE**

ERZEUGUNG VON VAKUUMISOLIERPLATTEN

CREATION OF VACUUM INSULATION PANELS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.10.2016 FR 1660192**

(43) Date de publication de la demande:
**28.08.2019 Bulletin 2019/35**

(73) Titulaire: **Electricité de France**
**75008 Paris (FR)**

(72) Inventeurs:
• **YRIEIX, Bernard**
**77250 Moret sur Loing (FR)**
• **PONS, Emmanuelle**
**77210 Avon (FR)**
• **DUBELLEY, Florence**
**73190 Apremont (FR)**
• **PLANES, Emilie**
**73170 Billeme (FR)**
• **BAS, Corine**
**73000 Chambery (FR)**
• **FLANDIN, Lionel**
**73210 Peisey Nancroix (FR)**

(74) Mandataire: **Plasseraud IP**
**66, rue de la Chaussée d'Antin**
**75440 Paris Cedex 09 (FR)**

(56) Documents cités:
**EP-A1- 2 871 401    WO-A1-2008/085288**

**Description**

L'invention relève du domaine des panneaux isolants sous vide et en particulier des films entrant dans la fabrication de tels panneaux. La fabrication d'un tel panneau est par exemple décrite dans le document WO 2008/085288 A1.

Dans le contexte de l'isolation thermique des bâtiments, les panneaux isolants sous vide (ou PIV) présentent un rapport efficacité sur encombrement bien meilleur que celui des couches de laine de verre et de laine de roche. Les développements récents dans le domaine des PIV ont conduit à concevoir de nouveaux complexes multicouches pour former l'enveloppe étanche des PIV.

Les nouveaux complexes présentent des performances particulièrement prometteuses. Néanmoins, la demanderesse a constaté que les performances pouvaient être fortement dégradées au cours du temps en conditions réelles. Les essais réalisés en laboratoires préalablement à l'utilisation en condition réelle n'avaient pas permis d'anticiper de tels défauts.

L'invention vient améliorer la situation.

La demanderesse propose un procédé de création de panneaux isolant sous vide comprenant les étapes suivantes :

a) sélectionner un premier film et un second film candidats à un assemblage l'un avec l'autre pour la création d'un panneau isolant sous vide,
b) marquer chacun du premier film et du second film de repères répartis dans leur surface respective,
c) porter et maintenir chacun du premier film et du second film à une température T supérieure à la température ambiante pendant une durée t prédéfinie,
d) établir une cartographie du retrait de chacun du premier film et du second film par comparaison de la position des repères avant et après l'étape de chauffage,
e) établir une cartographie du retrait différentiel du couple constitué du premier film et du second film par comparaison des cartographies du retrait de chacun du premier film et du second film,
f) retenir le couple du premier film et du second film pour la création d'un panneau isolant sous vide si et seulement si la cartographie du retrait différentiel montre un retrait différentiel inférieur à une valeur seuil S, ladite valeur seuil S étant choisie en fonction de la température T, de la durée t et d'une colle prévue pour l'assemblage ultérieur du premier film et du second film l'un avec l'autre.

Un tel procédé permet d'estimer avec une bonne fiabilité la résistance à la délamination de chaque complexe possible, qu'il comprenne deux films ou plus, notamment dans les conditions réelles d'utilisation et sur une longue durée. Contrairement aux essais de vieillissement thermo-hygrique réalisés sur les complexes déjà assemblés, les quantités de film utilisées pour former les échantillons nécessaires au procédé sont faibles. Les opérations usuelles d'assemblage, notamment l'encollage, sont ici inutiles. Le procédé présente donc une meilleure répétabilité, est plus rapide et moins coûteux.

Dans les essais mis en œuvre jusqu'à maintenant, il existait des différences entre les opérations d'assemblage réalisées en petite quantité au stade des essais et les opérations d'assemblage réalisées au stade de la production industrielle sur des bobines de film de plusieurs kilomètres débitées à haute vitesse. De telles différences induisaient un biais qui nuisait à la pertinence des résultats. Le biais était d'autant plus dommageable que les opérations d'assemblage jouent un rôle important dans les phénomènes de délamination. Dans le procédé proposé, ce biais est inexistant.

Le procédé proposé permet d'harmoniser à volonté les conditions, notamment de température et de durée, avec les conditions de service réelles prévues plutôt que d'utiliser les données théoriques disponibles qui sont souvent éloignées des conditions réelles d'usage. La fiabilité des prévisions s'en trouve améliorée.

D'autres caractéristiques, détails et avantages de l'invention apparaîtront à la lecture de la description détaillée ci-après, et à l'analyse des dessins annexés, sur lesquels :

- la figure 1 montre une vue d'un complexe barrière pour PIV,
- la figure 2 montre une vue d'un complexe barrière pour PIV,
- la figure 3 montre une étape du procédé selon l'invention,
- la figure 4 montre un exemple de représentation d'une cartographie d'un film isotrope établie selon le procédé,
- la figure 5 montre un exemple de représentation d'une cartographie d'un film anisotrope établie selon le procédé,
- les figures 6 à 9 montrent des exemples de cartographies établies selon le procédé, et
- la figure 10 montre des superpositions de cartographies établies selon le procédé.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

Dans la suite, les termes « retrait » ou « rétractation » sont employés pour définir toute variation de dimension des films. Les films proposés en exemple tendent à voir leurs dimensions se réduire au cours du temps sous l'effet de la température. Pour autant, ces termes doivent être entendus comme visant les modifications de dimension indépendamment du sens de variation. Autrement dit, les retraits exprimés avec un facteur négatif définissent une diminution de dimensions tandis que les retraits exprimés avec un facteur positif définissent une augmentation de dimension au cours du temps, soit une élongation.

Les panneaux isolants sous vide PIV prennent généralement la forme de plaques d'épaisseur sensiblement constante et présentent des tailles adaptées pour le recouvrement de parois de bâtiments à des fins d'isolation thermique. Les PIV présentent par exemple des largeurs comprises entre 300 et 1 200 millimètres sur des longueurs comprises entre 600 et 1 200 millimètres. Les performances thermiques unitaires de tels PIV permettent d'assurer des isolations thermiques satisfaisantes dans le domaine du bâtiment avec des épaisseurs inférieures à 60 millimètres, et de préférence inférieure à 35 millimètres.

Dans le domaine, on qualifie de super isolants thermiques des matériaux présentant, à température ambiante, un niveau de conductivité thermique inférieure à 0,025 $W.m^{-1}.K^{-1}$. Les PIV ont une conductivité thermique (initiale) inférieure à 0,007 $W\ m^{-1}\ K^{-1}$, et de préférence inférieure à 0,005 $W\ m^{-1}\ K^{-1}$.

Les PIV comprennent un matériau de cœur poreux isolant, par exemple à structure micro-cellulaire ou nano-cellulaire à cellules ouvertes. Le matériau de cœur est maintenu sous vide dans une enveloppe barrière garantissant l'étanchéité aux gaz, notamment ceux de l'air comme le diazote, le dioxygène et la vapeur d'eau. L'enveloppe barrière doit rester étanche tout au long de la vie du PIV, et en particulier suite aux opérations de fabrication du PIV et d'installation sur site.

L'enveloppe barrière est généralement réalisée à partir d'un complexe barrière, c'est-à-dire un multicouche. Un tel multicouche peut comprendre un assemblage de film polymère métallisé, de film polymère non métallisé et/ou de film métallique. Lors de la fabrication du PIV, deux morceaux de multicouche, généralement de même nature, viennent recouvrir chacune des deux faces principales du matériau de cœur. Puis, les deux morceaux de multicouche sont assemblés l'un à l'autre par une ligne d'étanchéité continue de manière à former l'enveloppe étanche. La ligne d'étanchéité scellant l'enveloppe autour du matériau de cœur est généralement formée par soudure.

Les propriétés que l'on souhaite assurer avec les complexes utilisés pour former l'enveloppe peuvent être décomposées de la manière suivante :

- La barrière à la vapeur et à l'air. Ceci est principalement assuré par les couches métalliques. Optionnellement, une barrière spécifique au dioxygène peut être prévue, par exemple au moyen d'un film à base de copolymère éthylène-alcool vinylique (EVOH).
- la tenue mécanique. Ceci est principalement assuré par des films mécaniquement résistants mais suffisamment souples pour supporter la mise sous vide, par exemple à base de polyéthylène téréphtalate (PET), de polyamide (PA) et/ou de polypropylène (PP).
- la scellabilité pour garantir l'étanchéité. Ceci est principalement assuré par un film fusible à basse température, par exemple à base de polyéthylène (PE) ou de polypropylène (PP).

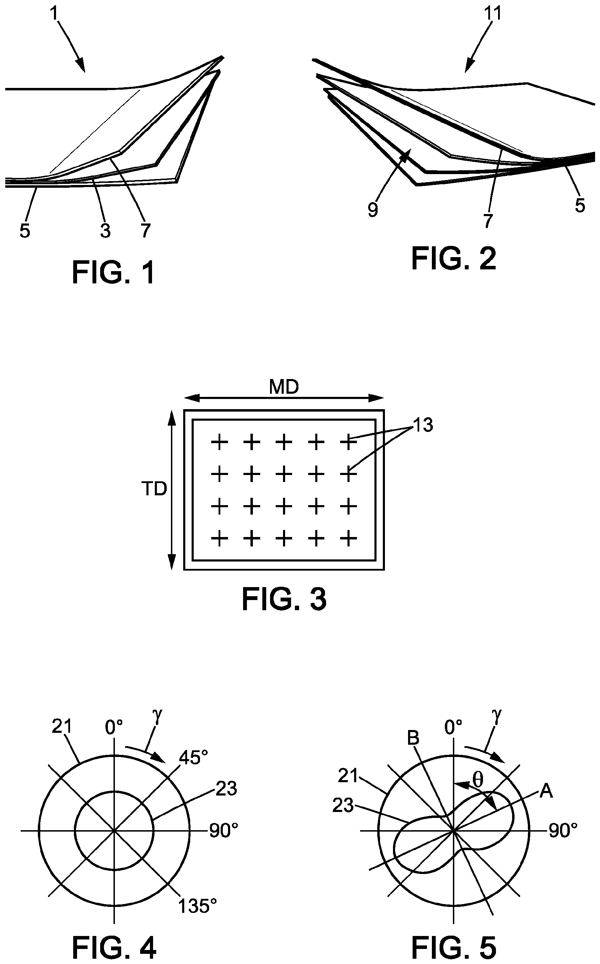

La figure 1 montre un premier exemple de complexe 1. Le complexe 1 comprend un film d'aluminium laminé 3, une couche de scellage 5 et un film support 7. Le film d'aluminium laminé 3 présente ici une épaisseur comprise entre 5 et 15 micromètres. La couche de scellage 5 prend ici la forme d'un film thermosoudable et présente une épaisseur comprise entre 20 et 100 micromètres.

Lors de la fabrication du PIV, la couche de scellage 5 forme une couche interne de l'enveloppe par rapport au film métallique, ici le film d'aluminium laminé 3. Le film support 7 forme quant à lui une couche externe. Autrement dit, lors de la fabrication du PIV, la couche de scellage 5 est située du côté du matériau de cœur tandis que le film support 7 est situé du côté extérieur du PIV.

Le film support 7 couvre le film d'aluminium laminé 3 du côté externe, c'est-à-dire du côté opposé à la couche de scellage 5. Le film support 7 est mécaniquement résistant. La structure et la composition du film support 7 sont sélectionnées de manière à conférer au complexe une tenue mécanique s'opposant aux pliages accidentels du complexe 1. Le film support 7, permet de limiter les risques de détérioration du film métallique lors de la manutention, du transport et en particulier de l'installation sur site du PIV, par exemple en absorbant les chocs et percements accidentels. Le film d'aluminium laminé 3 est aussi protégé de la corrosion par le film support 7. Ici, le film support 7 présente une épaisseur comprise entre 12 et 25 micromètres.

En figure 2, un complexe 11 est représenté. Le complexe 11 est similaire au complexe 1 de la figure 1, à ceci près que le film d'aluminium laminé 3 est remplacé par un à trois films polymères métallisés 9, ici deux films polymères métallisés 9. Ici, chaque film métallisé 9 présente une épaisseur d'environ 12 micromètres dont 20 à 120 nanomètres d'aluminium.

En variante, le film support 7 est lui-même métallisé. Par exemple, le film support 7 peut être similaire aux films polymères métallisés 9.

Lors de la fabrication des complexes 1, 11, les films 3, 5, 7, 9 composant les complexes 1, 11 sont laminés ensembles au moyen d'une colle, par exemple une colle de type polyuréthane (PU). Dans un contexte industriel, de telles opérations sont automatisées. Par exemple deux bobines supportant chacune une bande de plusieurs kilomètres d'un type de film sont débobinées à haute vitesse, par exemple à environ 2 mètres par seconde, tandis que les deux films sont encollés et laminés ensemble et sensiblement en continu. Après un délai de réticulation de la colle assurant une bonne adhésion des deux films, l'assemblage ainsi obtenu forme déjà un complexe en tant que tel. Ce premier assemblage est à son tour assemblé à un troisième film d'une manière similaire. Ces opérations sont répétées autant de fois que nécessaire pour obtenir le complexe final souhaité. Le conditionnement en bobine de chaque film explique les distinctions entre les directions « machine » (MD) et « transversale » (TD) dans la suite.

L'hétérogénéité de tels complexes 1, 11 augmente les risques de défauts lors de la fabrication et de détériorations au cours du temps, ce qui peut entraîner à terme une dégradation des performances. Ce risque est encore augmenté avec l'exposition à des conditions difficiles telles que des températures élevées et une humidité élevée.

Jusqu'à maintenant, les films utilisés pour fabriquer un complexe était sélectionnés pour leurs propriétés intrinsèques sans tenir compte de leurs influences mutuelles en service. Au mieux, le type de colle utilisé était adapté aux films entre lesquels elle était disposée. En outre, les acteurs du domaine des PIV avaient tendance à choisir les films à utiliser en se basant sur les propriétés indiquées dans les informations techniques accompagnant les films. Or la demanderesse a, par exemple, constaté des effets de délamination, d'hydrolyse des PET et des PU et de corrosion des couches d'aluminium. Les informations techniques propres à chaque film ou les essais préalables réalisés en laboratoire sur les complexes n'avaient pas permis d'anticiper de tels défauts.

Réaliser un essai de vieillissement thermo-hygrique sur un complexe est long et coûteux. Or un complexe est une combinaison d'au moins deux films et d'au moins une colle. Réaliser un essai de vieillissement thermo-hygrique pour chaque complexe possible parmi les pluralités de films et de colles disponibles n'est pas raisonnable. La demanderesse a donc développé le procédé décrit ci-après.

L'étape a) comprend : sélectionner un premier film et un second film, candidats à un assemblage l'un avec l'autre pour la création d'un panneau isolant sous vide (PIV).

Les films déjà utilisés dans la fabrication d'enveloppes barrière, soit les PET, PA, PE, PP et EVOH, peuvent être candidats à un assemblage en complexe. En variante, d'autres types de films peuvent être utilisés en complément ou en remplacement, par exemple des films métallisés ou revêtus d'un dépôt minéral, organique ou hybride. Les revêtements peuvent par exemple comprendre des couches d'oxyde, de nitrure et/ou de carbone.

De tels films présentent souvent une direction machine MD et une direction transversale TD. Leur masse moléculaire, leur étirage et la formulation fine varie selon les produits. De tels films peuvent être homogènes dans l'épaisseur ou être eux-mêmes des multicouches, par exemple obtenus par co-extrusion. La plupart des films présente des épaisseurs comprises entre 6 et 100 micromètres, et de préférence entre 10 et 50 micromètres. Par exemple, les films à base de PET ont de préférence une épaisseur inférieure à 23 micromètres tandis que les films à base de PE ont de préférence une épaisseur inférieure à 100 micromètres.

L'étape b) comprend : marquer chacun du premier film et du second film de repères répartis dans leur plan principal respectif. Une telle étape de marquage facilite, voire rend possible, l'analyse ultérieure lorsque les films présentent une bonne homogénéité, ce qui est souhaitable.

La figure 3 représente schématiquement cette étape. Des repères visuel 13, ici en forme de croix, sont dessinées tous les 20 millimètres dans la direction machine MD et tous les 20 millimètres dans la direction transversale (TD). Ici, l'échantillon utilisé est un rectangle de 140 millimètres sur 120 millimètres.

En variante, d'autres types de marquages compatibles avec le traitement thermique appliqué et avec les méthodes de mesure mis en œuvre dans la suite peuvent être utilisés. Par exemple une mire, ou des motifs peuvent être appliqués sur les échantillons, y compris des marques non visibles à l'œil nu mais repérables et interprétables par un système de mesure en partie automatisé.

L'étape c) comprend : porter et maintenir chacun du premier film et du second film à une température T supérieure à la température ambiante pendant une durée t prédéfinie.

Dans l'exemple décrit ici, l'étape du chauffage est réalisée en plaçant les échantillons de films marqués sur un lit d'agent antiadhésif, ici d'épaisseur d'environ 20 millimètres et sous forme de poudre à base de kaolin et dans un contenant métallique. Le contenant et le lit d'agent antiadhésif sont préalablement mis à la température T. La surface supérieure des échantillons est aussi saupoudrée de poudre à base de kaolin. Ensuite, l'ensemble est maintenu à la température T pendant une durée t, ici au moyen d'un four à circulation d'air. Une opération de chauffage peut être réalisée sur un grand nombre d'échantillons différent en fonction de l'espace disponible dans le contenant. L'opération de chauffage peut aussi être réalisée indépendamment pour les deux films sélectionnés, par exemple en fonction de leur disponibilité.

Dans un premier exemple, la température T choisie est de 70°C et la durée t est de 200 jours, soit plus de six mois. De telles conditions sont considérées comme sévères pour les domaines d'utilisation usuels de certains films existants, par exemple le conditionnement médical ou alimentaire.

Les films existants sont rarement testés simultanément au-delà de 50°C et au-delà de quelques jours. Or, notamment dans le domaine de l'isolation thermique des bâtiments, des températures de 70°C sont plus représentatives de l'usage réel. En variante, une température T différente peut être mise en œuvre, par exemple entre 60°C et 120°C.

En variante, une durée t différente peut être mise en œuvre. De préférence, une durée d'au moins 30 jours (soit environ un mois), et de manière encore préférée supérieure à 90 jours, permet d'obtenir des résultats fiables.

Dans l'exemple décrit ici, une pression partielle d'eau est en outre maintenue à environ 1 400 Pa. Une telle valeur correspond sensiblement à une humidité relative de 50% à 23°C et aux conditions généralement admises dans le domaine du bâtiment en France. En variante, une valeur différente peut être choisie, par exemple pour correspondre à d'autres conditions atmosphériques. Une valeur d'environ 3 000 Pa peut être choisie pour correspondre à des applications prévues dans le sud-est asiatique. De manière générale, la demanderesse a constaté que la variation de l'humidité relative produisait peu d'effets sur la résistance à la délamination des complexes par rapports aux variations d'autres paramètres tels que la température T et la durée t.

À la fin de la durée t, le contenant et les échantillons sont refroidis, ici en sortant le contenant du four puis en le laissant refroidir jusqu'à température ambiante. Lorsque la poudre de kaolin atteint la température ambiante, les échantillons sont extraits du contenant et leurs surfaces débarrassées de la poudre restante, si besoin au moyen d'une brosse.

En variante, l'étape c) peut être mise en œuvre différemment du présent exemple. Les variations de dimension des films étant généralement inférieures à 3%, une rigueur dans le protocole de chauffage est nécessaire pour pouvoir utiliser des échantillons de petite taille sans compromettre la précision et la pertinence des mesures ultérieures. La poudre de kaolin permet ici d'éviter que le contact avec le contenant n'entrave le retrait des échantillons.

L'étape d) comprend : établir une cartographie du retrait de chacun du premier film et du second film par comparaison de la position des repères avant et après l'étape de chauffage.

Dans l'exemple décrit ici les comparaisons sont effectuées dans quatre directions principales, à savoir la direction machine MD, référencée par défaut 0°, la direction transversale TD référencée 90° et les deux directions diagonales référencées respectivement 45° et 135°. Pour chacune des directions, une longueur avant chauffage $L_0$ et une longueur après chauffage L sont mesurées. Ici, un microscope optique à faible grossissement est utilisé.

En variante, d'autres méthodes de mesure sont mises en œuvre. Par exemple, des moyens logiciels basés par exemple sur l'analyse d'image peuvent permettre d'automatiser en partie au moins les mesures. Dans des cas simplifiés, le nombre de directions étudiées peut être réduit. Par exemple, une seule direction peut être étudiée lorsque le comportement isotrope d'un film est connu. Une cartographie peut donc prendre la forme de données unidimensionnelles. Une cartographie peut même consister en une seule donnée d'allongement indépendamment de la direction.

Chacune des figures 4 et 5 montre un exemple de représentation graphique des longueurs pour un échantillon théorique respectif. Le trait 21 représente les longueurs initiales (avant chauffage) en fonction de la direction. Le trait 23 représente les longueurs finales (après chauffage) en fonction de la direction. L'angle $\gamma$ représente l'angle de la direction mesurée par rapport à une référence à 0°, ici arbitraire.

En figure 4, on constate que le trait 23 présente une forme circulaire, ce qui indique que l'échantillon théorique de la figure 4 présente un comportement isotrope. En figure 5, on constate que le retrait atteint un maximum (en valeur absolue) dans la direction B tandis que le retrait atteint un minimum (en valeur absolue) dans la direction A, perpendiculaire à la direction B. L'échantillon théorique de la figure 5 présente donc un comportement anisotrope.

Ce type de représentation graphique est un exemple. Les représentations graphiques peuvent présenter une grande variété.

Le retrait (ou l'élongation) $\delta$ est calculé selon l'équation (I) suivante :

$$\delta = \frac{\mathrm{L} - L_0}{L_0} \times 100 \qquad (I)$$

où

L$_0$ est une longueur initiale (avant chauffage) d'un élément de l'échantillon, par exemple une distance entre deux repères, et
L est la longueur finale de l'élément correspondant (après chauffage).

L'étape e) comprend : établir une cartographie du retrait différentiel du couple constitué du premier film et du second film par comparaison des cartographies du retrait de chacun du premier film et du second film.

D'après les résultats obtenus pour chaque film à l'étape d), la comparaison du retrait d'un premier film et du retrait d'un second film, ici direction par direction, permet d'obtenir un profil de retrait différentiel du couple de films. Dans la suite, la valeur du retrait différentiel s'entend en valeur absolue.

Dans les exemples qui suivent, la direction machine MD de chaque film est utilisée comme référence ($\gamma = 0°$). Ainsi, les retraits différentiels calculés correspondent à un assemblage du premier film et du second film avec leur direction machine MD respective alignées l'une avec l'autre. D'un point de vue industriel, cette indexation de l'un par rapport à l'autre se justifie par le conditionnement classique en bobine. Pour effectuer un assemblage sensiblement en continu, les films sont alignés selon leur direction machine MD respective. Néanmoins, au stade expérimentale du procédé, il est possible de tester d'autres indexations mutuelles d'un couple de films, par exemple en alignant la direction machine MD d'un film avec la direction transversale TD de l'autre film.

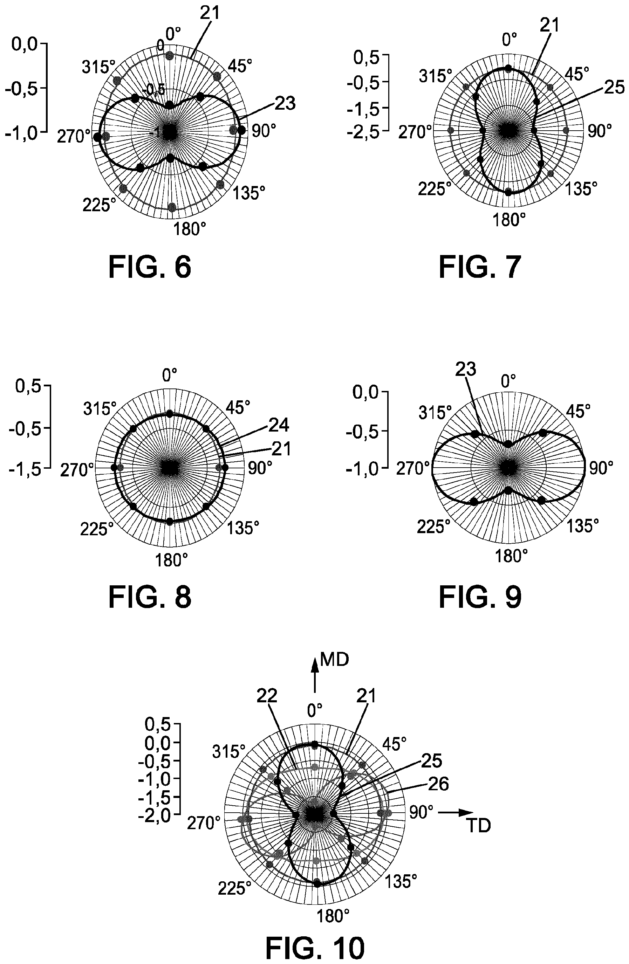

Sur les figures 6 à 10, la représentation s'inspire de l'exemple des figures 4 et 5, à ceci près que seuls les informations de deux films sont superposées sur un seul graphique et que seuls les traits correspondant aux mesures de longueurs après chauffage L sont représentées. La référence des longueurs mesurées avant chauffage $L_0$, commune aux deux films, est un cercle (représenté ou non) correspondant à la graduation 0 de l'échelle accompagnant le graphique. Sur ces figures, les points correspondent aux valeurs mesurées tandis que les courbes correspondent à un ajustement numérique.

L'ajustement numérique est ici réalisé par l'équation (II) suivante :

$$\delta = A.\cos^2(\gamma - \theta) + B.\sin^2(\gamma - \theta) \quad (\text{II})$$

où

$\gamma$ est l'angle orienté entre la direction machine MD (0°) et la direction de mesure ;
A (en pourcentage) est le retrait maximal (soit A le plus proche de 0 quand A et B sont négatifs) ;
B (en pourcentage) est le retrait minimal (soit B le plus éloigné de 0 quand A et B sont négatifs) ; et
$\theta$ est l'angle entre la direction machine MD (0°) et la direction correspondant au retrait A.

L'échelle représentée à gauche de chaque figure indique le retrait (en pourcentage %) pour la direction de référence ($\gamma = 0°$).

En figure 6, le film 21 présente un retrait quasi nul dans toutes les directions et a donc un comportement isotrope. Le film 23 présente un retrait important selon la direction machine MD et quasi nul selon la direction transversale TD. Le film 23 a donc un comportement anisotrope. Des essais de vieillissement thermo-hygrique réalisés sur le complexe montrent une délamination dans la direction transversale TD.

En figure 7, le film 21 présente un retrait quasi nul dans toutes les directions et a donc un comportement isotrope. Le film 25 présente un retrait important selon la direction transversale TD et quasi nul selon la direction machine MD. Le film 25 a donc un comportement anisotrope. Des essais de vieillissement thermo-hygrique réalisés sur le complexe montrent une délamination dans la direction machine MD.

En figure 8, le film 21 et le film 24 présentent chacun un retrait quasi nul dans toutes les directions et ont donc chacun un comportement isotrope. Des essais de vieillissement thermo-hygrique réalisés sur le complexe ne montrent pas de délamination.

En figure 9, deux films 23 identiques présentent un retrait important dans la direction machine MD et quasi nul selon la direction transversale TD. Chacun des deux films 23 a donc un comportement anisotrope. Les résultats étant similaires, les deux traits représentant les deux films 23 sont superposés. Des essais de vieillissement thermo-hygrique réalisés sur le complexe ne montrent pas de délamination.

En figure 10, le film 21 est réalisé à base de PET métallisé sur une face. Le film 22 est réalisé à base de PP. Le film 25 est réalisé à base de PE. Le film 26 est réalisé à base de PP métallisé sur une face. Le film 21 présente un retrait quasi nul dans toutes les directions et a donc un comportement isotrope. Le film 22 présente un retrait moyen selon la direction machine MD et quasi nul selon la direction transversale TD. Le film 22 a donc un comportement anisotrope. Le film 25 présente un retrait important selon la direction transversale TD et quasi nul selon la direction machine MD. Le film 25 a donc un comportement anisotrope. Le film 26 présente un retrait important selon une direction proche de la direction machine MD et quasi nul selon une direction proche de la direction transversale TD. Le film 26 a donc un comportement anisotrope.

Sur chacune des figures 6 à 10 les cartographies du retrait de plusieurs films sont superposées. Comparer les cartographies pour établir une cartographie du retrait différentiel d'un couple comprend d'évaluer la différence de retrait entre deux films, ici pour chaque direction. Visuellement, deux traits de l'une des figures 6 à 10 qui présentent une bonne superposition indiquent un retrait différentiel sensiblement nul pour le couple constitué des deux films sur chacune des directions. Physiquement, ceci indique un comportement thermique similaire des deux films. Dans une première approche, une analyse graphique permet d'éliminer rapidement des couples aux comportements trop différents. Une analyse numérique systématique permet de relever, pour chaque couple, la valeur maximale (en valeur absolue) du retrait différentiel en fonction de la direction, par exemple par des moyens informatiques.

Dans le tableau (III) suivant, quelques propriétés de films testés sont données.

Tableau III :

| Similitudes decomportement | Nature | Fournisseur / référence | Epaisseur | Particularité | Retrait max à 192 jours et à 70 °C (%) |
|---|---|---|---|---|---|
| Films scellant : | | | | | |
| Film 22 | PP | Alcan / CXPP SP SR | 50 $\mu$m | | - 0.7 dans la direction MD (anisotrope) |
| Film 25 | PE | Alcan / CX OF11 | 50 $\mu$m | | - 1.5 dans la direction TD (anisotrope) |
| Film 21 | PP | Alcan / CXPP SPHR | 50 $\mu$m | | 0 |
| Films barrière : | | | | | |
| Film 21 | PET | Dupont / Mylar 841 | 12 $\mu$m | | 0 |
| Film 23 | PP | Toray / PC3 | 12.5 $\mu$m | Métallisé | - 1.7 dans la direction MD (anisotrope) |
| | EVOH | Kuraray / TMXL15 | 15 $\mu$m | Métallisé | - 0.8 (isotrope) |
| Film 23 | PP/ EVOH | Exxon / 15MM288 | 15 $\mu$m | Métallisé | - 1.3 dans la direction MD (anisotrope) |
| Film 23 | PP/ EVOH | Exxon / 18MM883 | 18 $\mu$m | Métallisé | -1.1 dans la direction MD (anisotrope) |

L'étape f) comprend : retenir le couple du premier film et du second film pour la création d'un PIV si et seulement si la cartographie du retrait différentiel montre un retrait différentiel inférieur à une valeur seuil S, ladite valeur seuil S étant choisie en fonction de la température T, de la durée t et d'une colle prévue pour l'assemblage ultérieur du premier film et du second film l'un avec l'autre.

Pour déterminer la valeur seuil S à appliquer, plusieurs couples étalons de films sont soumis à un test similaire de vieillissement thermique, par exemple un test de vieillissement thermique connu en tant que tel ou dont les paramètres sont adaptés aux conditions d'utilisation prévues, soit ici la fabrication de PIV pour le bâtiment. Des tests de vieillissement sont par exemples décrits dans le document suivant : *H. Simmler, S. Brunner, U. Heinemann, H. Schwab, K. Kumaran, P. Mukhopadhyaya, D. Quénard, H. Sallée, K. Noller, E. Kükükpinar-Niarchos, C. Stramm, M. Tenpierik, H. Cauberg and M. Erb, "Vacuum Insulation Panels. Study on VIP-components and panels for service life prediction of VIP in building applications (Subtask A)", Technical report, IEA/ECBCS Annex 39 HiPTI-project (High Performance Thermal Insulation for Buildings and Building Systems), (September 2005).* Les retraits différentiels maximums des couples étalons sont calculés selon le procédé de l'invention. La valeur seuil S à appliquer est sélectionnée inférieure au retrait différentiel maximum des couples étalons pour lesquels des délaminations, voire des phénomènes de gondolage (« *curling* » en anglais) sont apparus. Optionnellement la valeur seuil S est en outre choisie supérieure au retrait différentiel maximum des couples étalons pour lesquels de tels phénomènes n'ont pas été constatés.

La colle utilisée pour les couples étalons subissant les essais de vieillissement thermique est similaire à celle prévue pour l'application réelle des couples testés.

De préférence, la valeur de la température T choisie correspond à la température maximale d'utilisation prévue. Dans le contexte de l'isolation thermique des bâtiments dans les zones tempérées du type Europe de l'ouest, une température de T d'environ 70°C semble appropriée.

Durant ses essais, la demanderesse a utilisé une température de 70°C, une pression partielle voisine de 1 400 Pa, une colle de type polyuréthane (PU) et une durée t de 200 jours. Elle en a déduit une valeur seuil S de 0,7 %. La demanderesse a également constaté que l'évolution du retrait au cours du temps semble suivre une loi exponentielle décroissante. Par conséquent, une durée t réduite de moitié (100 jours, soit environ 3 mois) permet d'obtenir des caractérisations fiables. Dans ce cas, les valeurs de retraits sont moindres (en valeur absolue) et donc la valeur seuil S est aussi plus petite (en valeur absolue). Pour une température de 70°C, une colle de type polyuréthane (PU) et une durée t de 100 jours, la demanderesse a obtenu une valeur seuil S de 0,6%. Pour une température de 70°C, une colle de type polyuréthane (PU) et une durée t de 45 jours, la demanderesse a obtenu une valeur seuil S de 0,5%. De manière générale, la demanderesse a déduit des valeurs seuil S supérieure à 0,4% et inférieure à 1%.

Ainsi, il est possible d'identifier les meilleurs couples de films pour la fabrication des PIV en menant un nombre limité d'essais de vieillissement thermique (longs et coûteux) en privilégiant le procédé rapide, peu coûteux.

En outre, les résultats du procédé sont partiellement réutilisables d'un couple à l'autre. En effet, les étapes a) à d) peuvent être mises en œuvre indépendamment pour chaque film candidat à une utilisation dans un complexe. Par exemple, les étapes a) à d) peuvent être mises en œuvre en parallèle pour une pluralité de films, le couplage de deux films parmi cette pluralité n'étant envisagé (étapes e) et f)) qu'après la réalisation des étapes a) à d) pour tous les films. Dans un autre exemple, les étapes a) à d) sont réalisées sur un premier film connu, puis *a posteriori* sur un second film nouvellement disponible et qu'il est envisagé d'assembler au premier film.

Il est également possible de vérifier la bonne tenue des complexes dans le temps, notamment vis-à-vis des délaminations. Ces propriétés peuvent être évaluées pour des conditions moyennes à sévères, c'est-à-dire à des températures comprises entre 40 et 70°C environ, et sur de longues durées (plusieurs mois).

Dans des variantes, le procédé comprend en outre les étapes ultérieures suivantes :
g) traiter l'un au moins du premier film et du second film de manière à modifier son comportement au retrait en réaction à la température,

- réitérer les étapes a) à d) pour le film traité,
- réitérer les étapes e) et f) à partir des cartographies disponibles à la fin de la réitération de l'étape d).

Si l'un des couples de films à l'état brut est écarté des solutions possibles pour réaliser un complexe des films, alors il est possible d'appliquer un traitement à l'un au moins des films bruts afin d'en modifier le comportement sous chauffage. Par exemple, des traitements thermiques permettent, pour certains films, de faire disparaître au moins en partie le comportement anisotrope dû au procédé de fabrication de certains films existants. Ensuite, le procédé peut être mis en œuvre de nouveau avec le même couple de films à la différence près que l'un au moins des deux films n'est plus brut mais a été traité. Si le critère de la valeur seuil S est cette fois respecté, alors le couple dont l'un des films est préalablement traité peut être retenu.

Dans des variantes, le procédé comprend une étape ultérieure supplémentaire :
h) assembler le premier film et le second film l'un avec l'autre au moyen de la colle prévue et en alignant le sens machine MD du premier film avec le sens machine MD du second film. Le complexe ainsi obtenu présente des propriétés, notamment en résistance à la délamination, compatibles avec une utilisation pour la fabrication de PIV destinés à l'isolation thermique des bâtiments.

L'invention ne se limite pas aux exemples de procédés décrits ci-avant et notamment dans le contexte de l'isolation thermique des parois de bâtiments, seulement à titre d'exemple, mais elle englobe toutes les variantes que pourra envisager l'homme de l'art dans le cadre des revendications ci-après. Par exemple, les PIV peuvent être utilisés pour l'isolation thermique dans le domaine des ventilations, du chauffage, du rafraîchissement, de l'éclairage, de l'eau chaude sanitaire et d'usages spécifiques de l'électricité. Les PIV entrent aussi dans la fabrication des réfrigérateurs et de boîtes de transport. Les procédés selon l'invention peuvent donc être mis en œuvre en adaptant les propriétés de température T, de temps t, de colles et d'humidité en fonction des applications prévues.

## Revendications

1. Procédé de création de panneaux isolants sous vide comprenant l'étape suivante:

   a) sélectionner un premier film (21, 22, 23, 24, 25, 26) et un second film (21, 22, 23, 24, 25, 26) candidats à un assemblage l'un avec l'autre pour la création d'un panneau isolant sous vide (1, 11),

   ledit procédé étant **caractérisé en ce qu'**il comprend les étapes suivantes:

   b) marquer chacun du premier film et du second film de repères (13) répartis dans leur surface respective,
   c) porter et maintenir chacun du premier film et du second film à une température T supérieure à la température ambiante pendant une durée t prédéfinie,
   d) établir une cartographie du retrait de chacun du premier film et du second film par comparaison de la position des repères (13) avant et après l'étape de chauffage,

e) établir une cartographie du retrait différentiel du couple constitué du premier film et du second film par comparaison des cartographies du retrait de chacun du premier film et du second film,

f) retenir le couple du premier film et du second film pour la création d'un panneau isolant sous vide si et seulement si la cartographie du retrait différentiel montre un retrait différentiel inférieur à une valeur seuil S, ladite valeur seuil S étant choisie en fonction de la température T, de la durée t et d'une colle prévue pour l'assemblage ultérieur du premier film et du second film l'un avec l'autre.

2. Procédé selon la revendication 1, dans lequel l'étape de chauffage est réalisée dans un contenant chauffé sensiblement à la température T avant d'y déposer les films, les deux faces de chaque film étant couvertes d'un agent antiadhésif du type des poudres à base de kaolin durant le chauffage, le chauffage étant réalisé au moyen d'un four à circulation d'air.

3. Procédé selon l'une des revendications précédentes, dans lequel l'étape d'établissement des cartographies du retrait des films est réalisée au moyen d'un microscope optique à faible grossissement.

4. Procédé selon l'une des revendications précédentes, dans lequel :

   - les cartographies établies distinguent les retraits en fonction d'une pluralité d'orientations dans le plan des films,
   - la comparaison des retraits des deux films étant réalisée pour chacune des paires de directions identiques entre les deux films, et dans lequel
   - le couple du premier film et du second film est retenu pour la création d'un panneau isolant sous vide si et seulement si la cartographie du retrait différentiel montre un retrait différentiel inférieur à la valeur seuil S pour chacune desdites directions.

5. Procédé selon l'une des revendications précédentes, dans lequel la température T est comprise entre 60°C et 120°C.

6. Procédé selon l'une des revendications précédentes, dans lequel la durée t est supérieure à 30 jours.

7. Procédé selon l'une des revendications précédentes, dans lequel la valeur seuil S est comprise entre 0,4% et 1%.

8. Procédé selon l'une des revendications précédentes, comprenant en outre les étapes ultérieures suivantes :
   g) traiter l'un au moins du premier film et du second film de manière à modifier son comportement au retrait en réaction à la température,

   - réitérer les étapes a) à d) pour le film traité,
   - réitérer les étapes e) et f) à partir des cartographies disponibles à la fin de la réitération de l'étape d).

9. Procédé selon l'une des revendications précédentes, dans lequel la valeur seuil S pour une température T, une durée t et une colle données, est fixée en fonction de résultats d'essais de vieillissement réalisés sur des complexes étalons dans des conditions de température T équivalentes, sur des durées strictement supérieures à la durée t et pour lequel les films sont assemblés avec ladite colle.

10. Procédé selon l'une des revendications précédentes, comprenant en outre l'étape ultérieure suivante :
    h) assembler le premier film et le second film l'un avec l'autre au moyen de ladite colle et en alignant le sens machine (MD) du premier film avec le sens machine (MD) du second film.

11. Procédé selon l'une des revendications précédentes, dans lequel l'un au moins du premier film et du second film est métallisé ou revêtu d'un dépôt minéral, organique ou hybride.

**Patentansprüche**

1. Verfahren zur Erzeugung von Vakuumisolationspaneelen, das den folgenden Schritt umfasst:

   a) Auswählen einer ersten Folie (21, 22, 23, 24, 25, 26) und einer zweiten Folie (21, 22, 23, 24, 25, 26), die zur Verbindung miteinander zur Erzeugung eines Vakuumisolationspaneels (1, 11) in Frage kommen, wobei das Verfahren **dadurch gekennzeichnet ist, dass** es die folgenden Schritte umfasst:

b) Kennzeichnen jeder der ersten Folie und der zweiten Folie mit Markierungen (13), die in ihrer jeweiligen Fläche verteilt sind,

c) Bringen jeder der ersten Folie und der zweiten Folie auf eine über der Umgebungstemperatur liegende Temperatur T und Halten auf dieser Temperatur während einer vorgegebenen Zeit t,

d) Erstellen einer Kartographie der Schrumpfung jeder der ersten Folie und der zweiten Folie durch Vergleichen der Position der Markierungen (13) vor und nach dem Erwärmungsschritt,

e) Erstellen einer Kartographie der differenziellen Schrumpfung des aus der ersten Folie und der zweiten Folie bestehenden Paares durch Vergleichen der Kartographien der Schrumpfung jeder der ersten Folie und der zweiten Folie,

f) Berücksichtigen des Paares aus der ersten Folie und der zweiten Folie zur Erzeugung eines Vakuumisolationspaneels dann und nur dann, wenn die Kartographie der differenziellen Schrumpfung eine differenzielle Schrumpfung unterhalb eines Schwellenwerts S zeigt, wobei der Schwellenwert S in Abhängigkeit von der Temperatur T, von der Zeit t und von einem zum späteren Verbinden der ersten Folie und der zweiten Folie miteinander vorgesehenen Klebstoff gewählt wird.

2. Verfahren nach Anspruch 1, bei dem der Erwärmungsschritt in einem Behälter ausgeführt wird, der im Wesentlichen auf die Temperatur T erwärmt wird, bevor die Folien darin abgelegt werden, wobei die beiden Seiten jeder Folie während des Erwärmens mit einem Antihaftmittel von der Art der Pulver auf Kaolinbasis bedeckt sind, wobei das Erwärmen mittels eines Umluftofens ausgeführt wird.

3. Verfahren nach einem der vorhergehenden Ansprüche, bei dem der Schritt des Erstellens der Kartographien der Schrumpfung der Folien mittels eines Lichtmikroskops unter geringer Vergrößerung ausgeführt wird.

4. Verfahren nach einem der vorhergehenden Ansprüche, bei dem:

- die erstellten Kartographien die Schrumpfungen in Abhängigkeit von einer Mehrzahl von Ausrichtungen in der Ebene der Folien unterscheiden,

- das Vergleichen der Schrumpfungen der beiden Folien für jedes der Paare aus identischen Richtungen zwischen den beiden Folien ausgeführt wird, und bei dem

- das Paar aus der ersten Folie und der zweiten Folie zur Erzeugung eines Vakuumisolationspaneels dann und nur dann berücksichtigt wird, wenn die Kartographie der differenziellen Schrumpfung für jede der Richtungen eine differenzielle Schrumpfung unterhalb des Schwellenwerts S zeigt.

5. Verfahren nach einem der vorhergehenden Ansprüche, bei dem die Temperatur T zwischen 60 °C und 120 °C liegt.

6. Verfahren nach einem der vorhergehenden Ansprüche, bei dem die Zeit t mehr als 30 Tage beträgt.

7. Verfahren nach einem der vorhergehenden Ansprüche, bei dem der Schwellenwert S zwischen 0,4 % und 1 % liegt.

8. Verfahren nach einem der vorhergehenden Ansprüche, das ferner die folgenden weiteren Schritte umfasst:
g) Behandeln mindestens einer der ersten Folie und der zweiten Folie derart, dass ihr Schrumpfungsverhalten als Reaktion auf die Temperatur verändert wird,

- Wiederholen der Schritte a) bis d) für die behandelte Folie,

- Wiederholen der Schritte e) und f) ausgehend von den am Ende der Wiederholung des Schritts d) verfügbaren Kartographien.

9. Verfahren nach einem der vorhergehenden Ansprüche, bei dem der Schwellenwert S für eine gegebene Temperatur T, eine gegebene Zeit t und einen gegebenen Klebstoff in Abhängigkeit von Ergebnissen von Alterungstests festgelegt wird, die an Standardkomplexen unter gleichwertigen Temperaturbedingungen T über Zeiten, die größer als die Zeit t sind, ausgeführt werden, und bei dem die Folien mit dem Klebstoff verbunden werden.

10. Verfahren nach einem der vorhergehenden Ansprüche, das ferner den folgenden weiteren Schritt umfasst:
h) Verbinden der ersten Folie und der zweiten Folie miteinander mittels des Klebstoffs und unter Ausrichtung der Maschinenrichtung (MD) der ersten Folie auf die Maschinenrichtung (MD) der zweiten Folie.

11. Verfahren nach einem der vorhergehenden Ansprüche, bei dem mindestens eine der ersten Folie und der zweiten Folie metallisiert ist oder mit einem mineralischen, organischen oder hybriden Überzug beschichtet ist.

**Claims**

1.  A method for creating vacuum insulation panels comprising the following step:

    a) selecting a first film (21, 22, 23, 24, 25, 26) and a second film (21, 22, 23, 24, 25, 26) which are candidates for assembly with each other for creating a vacuum insulation panel (1, 11),

    said method being **characterised in that** it comprises the following steps:

    b) marking each of the first film and the second film with marks (13) distributed over their respective surfaces,
    c) bringing and maintaining each of the first film and the second film to a temperature T higher than ambient temperature for a predefined duration t,
    d) establishing a shrinkage map of each of the first film and the second film by comparing the position of the marks (13) before and after the heating step,
    e) establishing a differential shrinkage map of the couple consisting of the first film and the second film by comparing the shrinkage maps of each of the first film and the second film,
    f) retaining the couple of the first film and the second film for creating a vacuum insulation panel if and only if the differential shrinkage mapping shows a differential shrinkage below a threshold value S, said threshold value S being selected according to the temperature T, the duration t and an adhesive provided for the subsequent assembly of the first film and the second film with each other.

2.  The method according to claim 1, wherein the heating step is carried out in a container substantially heated to the temperature T before depositing the films therein, the two faces of each film being covered with a non-stick agent of the kaolin-based powder-type during heating, the heating being carried out by means of an air circulation oven.

3.  The method according to one of the preceding claims, wherein the step of establishing the shrinkage maps of the films is carried out by means of a low magnification optical microscope.

4.  The method according to one of the preceding claims, wherein:

    - the established maps distinguish the shrinkage according to a plurality of orientations in the plane of the films,
    - the comparison of the shrinkage of the two films being carried out for each of the pairs of identical directions between the two films, and wherein
    - the couple of the first film and the second film is retained for creating a vacuum insulation panel if and only if the differential shrinkage mapping shows a differential shrinkage below the threshold value S for each of said directions.

5.  The method according to one of the preceding claims, wherein the temperature T is comprised between 60°C and 120°C.

6.  The method according to one of the preceding claims, wherein the duration t is greater than 30 days.

7.  The method according to one of the preceding claims, wherein the threshold value S is comprised between 0.4% and 1%.

8.  The method according to one of the preceding claims, further comprising the following subsequent steps:
    g) treating at least one of the first film and the second film so as to modify its shrinkage behaviour in reaction to temperature,

    - repeating steps a) to d) for the treated film,
    - repeating steps e) and f) from the maps available at the end of the repetition of step d).

9.  The method according to one of the preceding claims, wherein the threshold value S for a given temperature T, duration t and adhesive, is fixed depending on the results of aging tests carried out on standard complexes under equivalent temperature T conditions, over durations strictly greater than the duration t and for which the films are assembled with said adhesive.

10. The method according to one of the preceding claims, further comprising the following subsequent step:

h) assembling the first film and the second film with each other by means of said adhesive and by aligning the machine direction (MD) of the first film with the machine direction (MD) of the second film.

11. The method according to one of the preceding claims, wherein at least one of the first film and the second film is metallised or coated with a mineral, organic or hybrid deposit.

FIG. 1

FIG. 2

FIG. 3

FIG. 4

FIG. 5

FIG. 6

FIG. 7

FIG. 8

FIG. 9

FIG. 10

**EP 3 529 078 B1**

## RÉFÉRENCES CITÉES DANS LA DESCRIPTION

**Documents brevets cités dans la description**

- WO 2008085288 A1